# EUROPÄISCHE PATENTSCHRIFT

(11) **EP 3 795 321 B1**
(45) Veröffentlichungstag und Bekanntmachung des Hinweises auf die Patenterteilung: **29.05.2024**
(21) Anmeldenummer: 20194752.0
(22) Anmeldetag: 07.09.2020
(51) Int. Cl.: B29B 7/60, B29B 7/24, B29B 7/28, B29B 7/72, B65B 37/10, B65B 69/00, G01G 19/22, B01F 33/80, B01F 33/85, B01F 35/20, B29C 48/28

(54) **ANLAGE ZUM DOSIEREN UND/ODER MISCHEN VON SCHÜTTGUT MIT EINER MOBILEN DOSIEREINHEIT**
INSTALLATION FOR DOSING AND/OR MIXING BULK MATERIAL COMPRISING A MOBILE METERING UNIT
SYSTÈME DE DOSAGE ET/OU DE MÉLANGE D'UNE MATIÈRE EN VRAC COMPRENANT UNE UNITÉ DE DOSAGE MOBILE

(30) Priorität: 20.09.2019 DE 102019214396
(43) Veröffentlichungstag der Anmeldung: 24.03.2021
(73) Patentinhaber: Coperion GmbH, 70469 Stuttgart (DE)
(72) Erfinder: Huber, Martin, 88427 Bad Schussenried (DE); Scheirle, Johannes, 88085 Langenargen (DE); Wiedmann, Michael, 88250 Weingarten (DE)
(74) Vertreter: Rau, Schneck & Hübner Patentanwälte Rechtsanwälte PartGmbB

(56) Entgegenhaltungen:
- EP-A1- 2 465 780
- EP-A1- 3 196 136
- EP-A2- 1 516 831
- EP-B1- 1 622 707
- WO-A1-95/22042
- WO-A1-2010/028744
- DE-T2- 69 709 367
- US-A1- 2015 284 194

## Beschreibung

Die Erfindung betrifft eine Anlage mit einer Dosierstation, die eine mobile Dosiereinheit aufweist.

EP 1 622 707 B1 offenbart eine Vorrichtung zum Dosieren und Mischen pulverförmiger Materialien. Mittels eines Dosierbehälters und einer darin integrierten Dosiereinrichtung wird das Pulvermaterial in einen Chargenbehälter abgegeben, verwogen und gemischt. Dazu wird der Dosierbehälter oberhalb des Chargenbehälters angeordnet. Um die Beimengung verschiedener Rezepturbestandteile der Mischung in dem Chargenbehälter zu ermöglichen, ist an der Oberseite des Chargenbehälters ein Sammeltrichter angeordnet. Bei einer Änderung der Rezeptur der herzustellenden Schüttgutmischung müssen die Dosierbehälter aufwändig transportiert werden. Diese Vorrichtung weist eine geringe Flexibilität insbesondere mit Blick auf geänderte Rezepturen auf.

Weitere Anlagen zum Mischen von Schüttgut sind bekannt aus EP 1 516 831 A2, EP 3 196 136 A1, EP 2 465 780 A1, WO 2010/028 744 A1, WO 95/022 042 A1 und US 2015/0 284 194 A1.

Es ist Aufgabe der vorliegenden Erfindung, die Herstellung, also das Dosieren und/oder Mischen von Schüttgütern, zu vereinfachen und insbesondere mit reduziertem Kostenaufwand die Flexibilität hinsichtlich der Herstellung unterschiedlicher Schüttgutrezepturen zu erhöhen.

Diese Aufgabe ist erfindungsgemäß gelöst durch eine Anlage mit den im Anspruch 1 angegebenen Merkmalen.

Erfindungsgemäß wurde erkannt, dass die Flexibilität beim Dosieren und/oder Mischen von Schüttgütern erhöht ist, wenn eine Anlage modular aus miteinander lösbar verbindbaren Komponenten und/oder Einheiten aufgebaut ist. Abnehmende Losgrößen und eine zunehmende Vielfalt von Rezepturen und Rezepturbestandteilen können zuverlässig, prozesssicher und unaufwändig hergestellt werden. Die erfindungsgemäße Anlage zum Dosieren und/oder Mischen von Schüttgut ermöglicht einen erhöhten Automatisierungsgrad und damit eine erhöhte Effizienz. Die Dokumentation und somit die Nachverfolgbarkeit bei der Erstellung von Rezepturen sind verbessert.

Wesentlich ist, dass eine Dosiereinheit mobil ausgeführt ist und mit einem Vorratsbehälter, in dem Schüttgut bevorratet ist, koppelbar ist. Die Dosiereinheit weist ein, insbesondere rahmenartiges, Gerüst auf mit einer Abstellfläche und einer Aufstellfläche. Dadurch, dass das Gerüst die Abstellfläche und die Aufstellfläche aufweist, ist die Dosiereinheit stapelbar. Die Dosiereinheit ermöglicht eine flexible, modulare Kopplung mit verschiedenen Vorratsbehältern an einen Mischbehälter.

Die Abstellfläche dient zum Abstellen der Dosiereinheit beispielsweise auf einer Unterlage, insbesondere auf einem Aufnahmegerüst. Die Abstellfläche wird durch eine, insbesondere durch mehrere, insbesondere vier, Abstellstützen gebildet.

Die Aufstellfläche, die insbesondere parallel zur Abstellfläche orientiert ist, dient zum Aufstellen des Vorratsbehälters auf dem Gerüst. Zum Andocken des Vorratsbehälters dient ein am Gerüst angebrachtes Andockelement, insbesondere ein Andockstutzen. Mit dem Andockelement ist ein Dosierelement, insbesondere eine Dosierschnecke, verbunden. Das Dosierelement dient zum dosierten Abgeben, insbesondere Fördern, des vom Vorratsbehälter zugegebenen Schüttgut. Insbesondere dient das Dosierelement zum dosierten Abgeben des Schüttguts in den mit der Dosiereinheit verbundenen Mischbehälter. Insbesondere weist das Dosierelement eine Abgabeöffnung auf, die außerhalb der Projektion der Aufstellfläche angeordnet ist.

Insbesondere gewährleistet die Modularität der Anlage, dass bei einem Rezepturwechsel eine Kreuzkontamination zuverlässig verhindert ist. Eine verunreinigte Dosiereinheit kann unkompliziert von dem Vorratsbehälter und/oder einem Mischbehälter getrennt und durch eine gereinigte Dosiereinheit ersetzt werden. Dieser Austausch der Dosiereinheiten ist schnell und unkompliziert durchführbar. Die Prozesssicherheit ist erhöht.

Dadurch, dass die Dosiereinheit unabhängig von dem Vorratsbehälter ausgeführt ist, also insbesondere nicht im Vorratsbehälter integriert ausgeführt ist, kann der Vorratsbehälter sowohl als Dosierbehälter als auch als Mischbehälter eingesetzt werden. Die Investitions- und Betriebskosten sind reduziert.

Die Modularität der Anlage ist verbessert, wenn standardisierte Vorratsbehälter, sogenannte Intermediate Batch Container (IBC) verwendet werden. Der Vorratsbehälter weist ein Volumen von 100 1 bis 5000 1, insbesondere von 200 1 bis 3000 1 und insbesondere von 500 1 bis 1500 1 auf. Vorteilhafterweise sind die Vorratsbehälter mit einem Identifikationsmittel, insbesondere einem Strichcode oder QR-Code, markiert, um eine Fehlvermischung auszuschließen und/oder um die Dokumentation und die Nachverfolgbarkeit bei der Herstellung einer Schüttgutmischung zu verbessern, insbesondere zu automatisieren.

Eine Dosierstation umfasst eine mobile Dosiereinheit und einen auf der Aufstellfläche der mobilen Dosiereinheit abgestellten Vorratsbehälter.

Insbesondere weist die Dosierstation ein Aufnahmegerüst auf, wobei die mobile Dosiereinheit mit der Abstellfläche auf dem Aufnahmegerüst abgestellt ist. Dadurch ist die Dosiereinheit mit dem darauf angeordneten Vorratsbehälter erhöht, insbesondere gegenüber dem Mischbehälter, angeordnet. Die Abgabe des Schüttguts in den Mischbehälter, der auf einem niedrigeren Höhenniveau angeordnet ist, ist dadurch vereinfacht.

Die mobile Dosiereinheit, die Dosierstation und/oder die Anlage dienen zum Herstellen einer Rezeptur aus einer oder mehreren Schüttgutkomponenten, insbesondere beim Compoundieren, also der Aufbereitung von Kunststoffen unter Beimischung von Zuschlagstoffen zur Erzielung erwünschter Eigenschaftsprofile und können auch im Lebensmittel- und/oder Pharmaziebereich eingesetzt werden. Als Schüttgut dient insbesondere Kunststoffrohmaterial sowie Schüttgut aus dem Lebensmittel- und Pharmabereich, das mit anderem Schüttgutkomponenten wie Additiven, Stabilisatoren, insbesondere UV-Stabilisatoren, Licht-Stabilisatoren und/oder thermische Stabilisatoren, Füllstoffe, Weichmacher, Pigmente, insbesondere Farbpigmente, Antioxidantien, Verarbeitungshilfen, Gleitmittel dosiert und/oder gemischt wird. Es ist auch möglich, Schüttgut, das beispielsweise in Form einer Fehlmischung und/oder Verunreinigung außerhalb der zulässigen Toleranzbereiche eines Soll-Mischguts liegt, als sogenanntes Rework-Schüttgut wiederzuverwenden. Dafür kann das Schüttgut zumindest in kleinen Mengen für einen Mischprozess verwendet werden. Die Schüttgüter sind granulatförmig und insbesondere pulverförmig. Die Schüttgüter weisen Partikelgrößen mit einem Medianwert x₅₀ zwischen 10 µm und 5 mm, insbesondere zwischen 20 µm und 4 mm und insbesondere zwischen 30 µm und 3 mm auf.

Die Modularität vereinfacht einen Austausch bzw. einen Wechsel der mobilen Dosiereinheit mit dem Dosierelement. Als Dosierelement dient insbesondere eine Dosierschnecke, also eine Förderschnecke für Schüttgut. Die Dosiereinheit, die Dosierstation und/oder die Anlage können flexibel auf die Materialeigenschaften der unterschiedlichen Schüttgüter angepasst werden, die von gut rieselfähig bis schwer rieselfähig oder sogar schießend, von nicht anhaftend bis stark anhaftend und/oder von nicht fluidisierbar bis gut fluidisierbar und/oder von kampaktierend/zusammenbackend bis schmierend oder verstopfend sein können.

Insbesondere dienen dazu unterschiedlich ausgestaltete Dosierschnecken mit Schneckenelementen aus Vollgewinde, Bandgewinde oder Paddelgewinde. Die Steigung der Schneckengewinde kann das 0,2-fache bis 1,5-fache und insbesondere das 0,3-fache bis 1,0-fache des Außendurchmessers des Schneckengewindes betragen. Die Nennweite der Dosierschnecken hängt insbesondere von der zu dosierenden Menge der jeweiligen Schüttgutkomponente ab. Insbesondere beträgt die Nennweite zwischen 15 mm und 200 mm, insbesondere zwischen 40 mm und 150 mm und insbesondere zwischen 65 mm und 100 mm. Die Dosiermengen betragen zwischen 0,1 dm³/h bis 35000 dm³/h, insbesondere zwischen 1 dm³/h und 20000 dm³/h und insbesondere zwischen 15 dm³/h und 10000 dm³/h.

Für ein effizientes Dosieren können die Dosierschnecken zunächst im Grobstrom betrieben werden, um in kurzer Zeit einen großen Anteil der Dosiermenge in den Mischbehälter abzugeben. Die verbleibende Restmenge wird im Feinstrom dosiert. Die damit erzielbare Dosiergenauigkeit ist insbesondere kleiner +/- 5 % bezogen auf die Soll-Menge, insbesondere kleiner +/- 3 % und insbesondere kleiner +/- 1 %.

Anstelle der Dosierschnecke kann die Dosiereinrichtung auch als Vibrationsförderer oder als Bandförderer ausgebildet sein.

Der Vorratsbehälter weist insbesondere ein Grundgerüst auf, das rahmenartig ausgeführt ist. Das Grundgerüst des Vorratsbehälters gewährleistet ein zuverlässiges Anordnen des Vorratsbehälters auf der Aufstellfläche des Gerüsts der Dosiereinheit. Der Vorratsbehälter ist stapelbar ausgeführt. Der Vorratsbehälter und die Dosiereinheit, insbesondere das Gerüst der Dosiereinheit, sind derart modular aufeinander abgestimmt, dass eine unkomplizierte und sichere Kopplung der Module Vorratsbehälter und Dosiereinheit miteinander gewährleistet ist.

Die Anlage zum Dosieren und/oder Mischen von Schüttgut umfasst mindestens eine Dosierstation, einen mobilen Mischbehälter, der insbesondere an die Dosierstation angeschlossen ist, sowie eine Wiegeeinheit für den Mischbehälter. Insbesondere ist der Mischbehälter auf der Wiegeeinheit abgestellt. Die Anlage wird auch als Multi-Ingredient-Handling-Anlage bezeichnet. Es können auch mehrere mobile Mischbehälter vorgesehen sein. Der Mischbehälter weist insbesondere ein Volumen zwischen 30 1 bis 4000 1, insbesondere zwischen 100 1 bis 2000 1 und insbesondere zwischen 300 1 und 10001 auf. Bei der erfindungsgemäßen Anlage sind mehrere, insbesondere mindestens zwei, insbesondere mindestens vier, insbesondere mindestens fünf, insbesondere mindestens acht und insbesondere bis zu zwölf verschiedene Dosierstationen einem Mischbehälter zugeordnet. Die Anlage ermöglicht eine flexible Anordnung mindestens einer Dosierstation, insbesondere in Abhängigkeit der Anzahl der Rezepturbestandteile und/oder in Abhängigkeit der örtlichen Gegebenheiten, die eine räumliche Rahmenbedingung bilden können.

Eine Dosierstation mit einer mobilen Dosiereinheit und mit einem auf der Aufstellfläche der mobilen Dosiereinheit abgestellten Vorratsbehälter weist im Wesentlichen die Vorteile der mobilen Dosiereinheit auf, worauf hiermit verwiesen wird.

Eine Anlage zum Dosieren und/oder Mischen von Schüttgut mit mindestens einer Dosierstation, mit einem mobilen Mischbehälter und mit einer Wiegeeinheit für den Mischbehälter ermöglicht das unkomplizierte und flexible Dosieren und/oder Mischen von Schüttgütern.

Mindestens ein Verbindungselement gemäß Anspruch 2 gewährleistet eine sichere, aber lösbare Verbindung der mobilen Dosiereinheit mit weiteren Einheiten der Anlage, insbesondere mit dem Vorratsbehälter und/oder mit dem Aufnahmegerüst. Durch das Verbindungselement sind die weiteren Einheiten formschlüssig mit der Dosiereinheit, insbesondere mit dem Gerüst der Dosiereinheit, verbunden. Das Verbindungselement ist insbesondere ein Sicherungsbolzen, der in fluchtende Öffnungen der zu verbindenden Einheiten eingesteckt werden kann. Alternativ können automatische Sicherungselemente als Verbindungselemente verwendet werden wie beispielsweise ein schwenkbarer und/oder verdrehbarer Druckluft-Stellantrieb. Das angetriebene Verbindungselement ist insbesondere an der jeweils unten liegenden Moduleinheit, insbesondere der Dosiereinheit, angebracht und kann an der darüber angeordneten Moduleinheit, insbesondere dem Vorratsbehälter, in eine dafür vorgesehene Ausnehmung einschwenken. Bei dem Vorratsbehälter dient dazu insbesondere dessen Grundgerüst, insbesondere eine oberhalb einer Querstrebe angeordnete Sicherungsstrebe. Das antreibbare Verbindungselement kann auch elektromotorisch oder hydraulisch angetrieben sein.

Eine Ausführung des Andockelements gemäß Anspruch 3 gewährleistet eine veränderliche und dennoch zuverlässige und stabile Verbindung des Andockelements mit dem Vorratsbehälter. Insbesondere ist die Andockplatte senkrecht zur Plattenebene verlagerbar am Gerüst angeordnet.

Mindestens ein Verstellelement gemäß Anspruch 4 vereinfacht die Höhenverstellbarkeit der Andockplatte. Insbesondere sind mehrere, insbesondere mindestens zwei, insbesondere mindestens drei und insbesondere mindestens vier Verstellelemente vorgesehen, die insbesondere jeweils als pneumatisch betriebene Andockzylinder ausgeführt sind. Die Andockzylinder können auch elektromotorisch oder hydraulisch angetrieben sein. Ein Verkippen der Andockplatte bei der Höhenverstellung ist im Wesentlichen ausgeschlossen.

Eine Ausführung des Dosierelements gemäß Anspruch 5 vereinfacht eine flexible Positionierung des Dosierelements und/oder der Dosierstation relativ zum Mischbehälter. Die Dosiereinheit ermöglicht eine räumlich flexible, veränderliche Anordnung der Abgabeöffnung des Dosierelements bezogen auf das Gerüst und insbesondere bezogen auf das Andockelement. Das Dosierelement ist bezüglich einer Dosierelement-Schwenkachse in einer zur Abstellfläche parallel orientierten Ebene schwenkbar ausgeführt, insbesondere schwenkbar mit dem Andockelement verbunden. Die Dosierelement-Schwenkachse ist insbesondere konzentrisch zum Andockelement und senkrecht zur Abstellfläche orientiert.

Zusätzlich oder alternativ kann das Dosierelement in unterschiedlichen Längen ausgeführt sein.

Ein Fixierelement gemäß Anspruch 6 ermöglicht eine fixierte Anordnung des Dosierelements in einer Dosierelement-Schwenkposition. Ein unbeabsichtigtes Verlagern des Dosierelements aus der Dosierelement-Schwenkposition ist verhindert.

Eine Fixierelement-Ausnehmung gemäß Anspruch 7 ermöglicht die Festlegung definierter Schwenkpositionen des Dosierelements an dem Gerüst. Die Modularität der Anlage ist dadurch vereinfacht.

Ein Klappenantrieb gemäß Anspruch 8 ermöglicht eine automatisierte Betätigung einer Klappe, insbesondere einer Handklappe, des Vorratsbehälters. Die automatisierte Durchführung des Dosierens ist dadurch vereinfacht.

Eine Austragshilfe gemäß Anspruch 9 dient zum verbesserten Austrag des Schüttguts aus dem Vorratsbehälter, insbesondere bei Schüttgütern, die dazu neigen, nicht oder schlecht aus dem Vorratsbehälter auszulaufen oder anzubacken. Eine Austragshilfe kann einen pneumatischen Klopfer, ein Rührwerk, einen Rüttler und/oder Vibratoren aufweisen, um ein sicheres Austragen des Schüttguts aus dem Vorratsbehälter sowie einen zuverlässigen Dosierprozess zu gewährleisten. Die Austragshilfe ist insbesondere mittels einer verstellbaren Halterung am Gerüst veränderlich anordenbar.

Eine Anlage gemäß Anspruch 10 ermöglicht eine automatisierte Durchführung eines Dosier- und/oder Mischprozesses. Die Prozesssicherheit ist erhöht. Das Risiko von falschen Rezepturen und Fehldosierungen ist reduziert. Mit einer vollautomatischen Anlage für das Multi-Ingredient-Handling werden Fehlerquellen systematisch ausgeschlossen. Insbesondere ist es möglich, von der Lagerung des Schüttguts über den Transport, die Dosierung und die Mischung einer gewünschten Rezeptur die einzelnen Prozessschritte mit der Anlage automatisiert durchzuführen. Eine zentrale Steuerungseinheit ist dazu mit verschiedenen Einheiten der Anlage in Signalverbindung, insbesondere mit der Wiegeeinheit, mit dem Vorratsbehälter, insbesondere der daran angebrachten Klappe und insbesondere dem Klappenantrieb der Dosiereinheit, und/oder mit der mobilen Dosiereinheit, insbesondere dem Dosierelement. Die Signalverbindung kann kabelgebunden oder kabellos erfolgen.

Eine Anlage gemäß Anspruch 11 gewährleistet einen unkomplizierten, autonomen und unmittelbaren Transport verschiedener Einheiten der Anlage. Insbesondere dient das Transportmittel zum Transport eines Mischbehälters und/oder eines Vorratsbehälters. Als Transportmittel dient beispielsweise ein Transportfahrzeug wie beispielsweise ein Flurförderfahrzeug. Ein Transportmittel kann auch eine Rollenbahn und/oder ein Schwenkarm mit Laufkatze und/oder ein mobiler Hebekran sein. Insbesondere steht das Transportmittel mit der zentralen Steuerungseinheit in Signalverbindung.

Eine Anlage gemäß Anspruch 12 ermöglicht das Mischen des dosierten Mischguts im Mischbehälter. Eine hierfür vorgesehene Mischeinheit ermöglicht eine Rotation und/oder Taumelbewegung des Mischbehälters, um eine homogene Mischung des Mischguts, das verschiedene Schüttgüter aufweisen kann, zu erreichen. Es ist auch denkbar, dass der Mischbehälter Mischwerkzeuge aufweist wie beispielsweise ein Rührwerk oder Paddel.

Eine Anlage gemäß Anspruch 13 ermöglicht eine platzsparende, geordnete und definierte Aufbewahrung von Moduleinheiten der Anlage, die für eine aktuelle Anlagenkonfiguration nicht erforderlich sind.

Sowohl die in den Patentansprüchen angegebenen Merkmale als auch die in den nachfolgenden Ausführungsbeispielen der erfindungsgemäßen Dosiereinheit, Dosierstation oder Anlage angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf. Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine perspektivische Darstellung einer Anlage zum Dosieren und/oder Mischen von Schüttgut mit mehreren, jeweils eine erfindungsgemäße mobile Dosiereinheit aufweisende Dosierstationen,
- Fig. 2: eine Seitenansicht einer Dosierstation mit Mischbehälter und Wiegeeinheit gemäß Fig. 1,
- Fig. 3: eine vergrößerte Detailansicht des Details III in Fig. 2,
- Fig. 4: eine perspektivische Darstellung einer mobilen Dosiereinheit der Dosierstation in Fig. 2,
- Fig. 5: eine Seitenansicht der mobilen Dosiereinheit in Fig. 4,
- Fig. 6: eine Draufsicht auf die mobile Dosiereinheit in Fig. 4,
- Fig. 7: eine vergrößerte Detailansicht des Details VII in Fig. 5,
- Fig. 8: eine Schnittdarstellung gemäß der Schnittlinie VIII-VIII in Fig. 7,
- Fig. 9: eine Längsschnittdarstellung durch die mobile Dosiereinheit im Bereich eines Andockstutzens,
- Fig. 10: eine vergrößerte Detailansicht gemäß Detail X in Fig. 2,
- Fig. 11: eine Schnittdarstellung gemäß Schnittlinie XI-XI in Fig. 10,
- Fig. 12: eine schematische Draufsicht auf eine Anlage mit zwei Dosierstationen,
- Fig. 13: eine Fig. 12 entsprechende Darstellung einer Anlage mit fünf Dosierstationen,
- Fig. 14: eine Fig. 12 entsprechende Darstellung einer Anlage mit acht Dosierstationen.

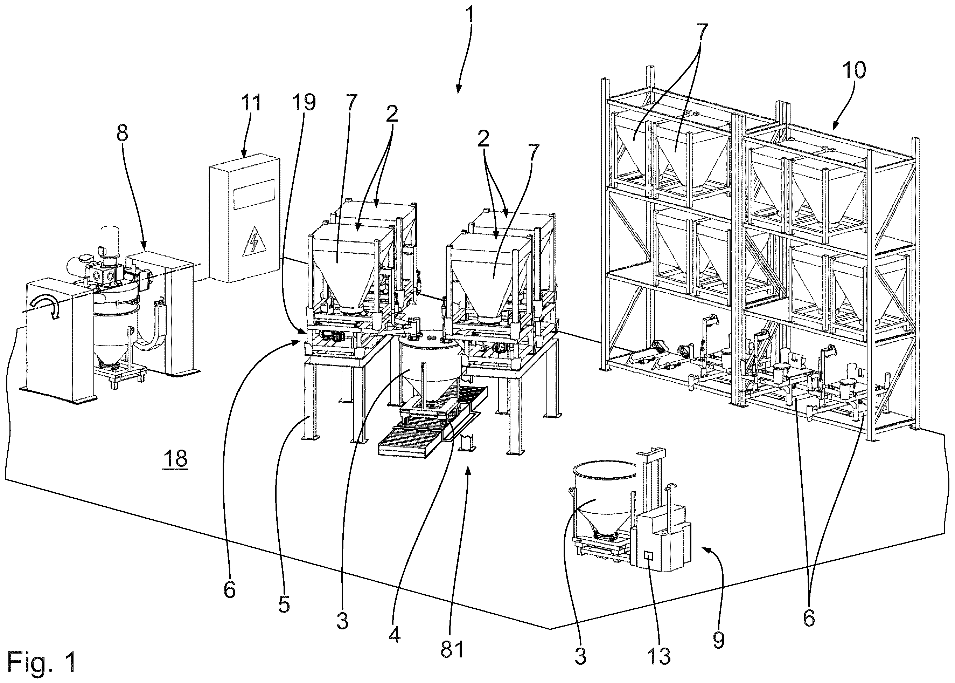

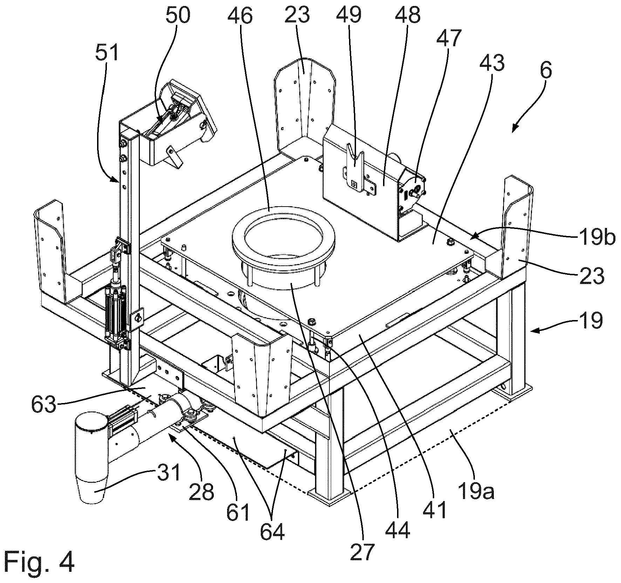

Eine in Fig. 1 bis 11 dargestellte, als Ganzes mit 1 bezeichnete Anlage dient zum Dosieren und/oder Mischen von Schüttgut, das granulatförmig, insbesondere pulverförmig, ist. Gemäß dem gezeigten Ausführungsbeispiel ist die Anlage 1 als Compoundieranlage für die Herstellung von Kunststoffschüttgutmischungen ausgebildet. Die Anlage 1 ist für das Multi-Ingredient-Handling geeignet.

Die Anlage 1 umfasst gemäß dem gezeigten Ausführungsbeispiel vier Dosierstationen 2, die gemeinsam mit einem mobilen Mischbehälter 3 fördertechnisch verbunden sind. Der mobile Mischbehälter 3 ist auf einer Wiegeeinheit 4 angeordnet.

Jeweils zwei Dosierstationen 2 sind nebeneinander und seitlich neben der Wiegestation 4 angeordnet. Die Dosierstationen 2 sind paarweise gegenüberliegend bezüglich der Wiegestation 4 angeordnet.

Jede Dosierstation 2 weist eine mobile Dosiereinheit 6 und ein Vorratsbehälter 7 auf, der auf der Dosiereinheit 6 abgestellt ist. Zwei Dosiereinheiten 6 mit jeweils einem darauf abgestellten Vorratsbehälter 7 sind auf einem Aufnahmegerüst 5 abgestellt. Das Aufnahmegerüst 5 ist auf dem Boden 18 abgestellt. Es ist auch denkbar, dass für eine einzelne mobile Dosiereinheit 6 mit darauf abgestellten Vorratsbehälter 7 ein separates Aufnahmegerüst 5 vorgesehen ist.

Mindestens eine mobile Dosiereinheit 6, ein Vorratsbehälter 7 und die Wiegeeinheit 4 bilden ein Dosier- und Verwiegesystem 81.

Die Anlage 1 weist eine Mischeinheit 8 auf. Die Mischeinheit 8 kann einen Mischbehälter 3 aufnehmen und dient zum Mischen der in dem Mischbehälter 3 vorhandenen Schüttgutmischung. Dazu kann die Mischeinheit 8 eine Dreh- oder Taumelbewegung des Mischbehälters 3 durchführen.

Die Anlage 1 weist mindestens ein Transportmittel 9 auf, das gemäß dem gezeigten Ausführungsbeispiel als fahrerloses Transportsystem ausgeführt ist. Das Transportmittel 9 dient insbesondere für den Transport eines Mischbehälters 3 von den Dosierstationen 2 zu der Mischeinheit 8. Das Transportmittel 9 dient auch für den Antransport eines leeren Mischbehälters 3 zu den Dosierstationen 2. Das Transportmittel 9 kann auch für den Transport anderer Anlagenkomponenten oder Anlageneinheiten, insbesondere von Vorratsbehältern 7 und mobilen Dosiereinheiten 6, genutzt werden.

Die Anlage 1 weist einen Lagerbereich mit einem Teilelager 10 auf. Das Teilelager 10 ist gemäß dem gezeigten Ausführungsbeispiel als offenes, mehretagiges Lagergestell ausgeführt, in dem Einheiten der Anlage 1, insbesondere mobile Dosiereinheiten 6, Vorratsbehälter 7 und andere Komponenten eingelagert werden können.

Die Anlage 1 weist eine zentrale Steuerungseinheit 11 auf. Die zentrale Steuerungseinheit 11 steht mit den mobilen Dosiereinheiten 6, den Vorratsbehältern 7, der Wiegeeinheit 4, dem Transportmittel 9 und der Mischeinheit 8 in Signalverbindung. Die Signalverbindung kann kabelgebunden oder kabellos erfolgen.

Die Mischbehälter 3 und die Vorratsbehälter 7 sind jeweils mit einem Identifikationsmittel 12 ausgerüstet. Gemäß dem gezeigten Ausführungsbeispiel ist das Identifikationsmittel 12 als ein an der Außenseite des Behälters 3, 7 angebrachter Strichcode oder QR-Code ausgeführt. Das Identifikationsmittel 12 kann auch als RFID-Chip ausgeführt sein, der an dem Behälter 3, 7 angebracht oder dort beispielsweise in einer Behälterwand integriert ausgeführt ist. Das Identifikationsmittel 12 ist mittels eines geeigneten Lesegeräts 13 auslesbar. Das Identifikationsmittel 12 enthält insbesondere den jeweiligen Behälter 3, 7 eindeutig identifizierbare Informationen wie insbesondere eine eindeutige Behälternummer und das darin bevorratete Schüttgut bzw. Mischgut. Das Lesegerät 13 kann vorteilhafterweise in dem Transportmittel 9 integriert ausgeführt sein. Das Lesegerät 13 kann auch separat, insbesondere als Handgerät, ausgeführt sein, das von einer Bedienperson betätigt wird. In Fig. 1 ist schematisch die integrierte Ausführung des Lesegeräts 13 am Transportmittel 9 gezeigt.

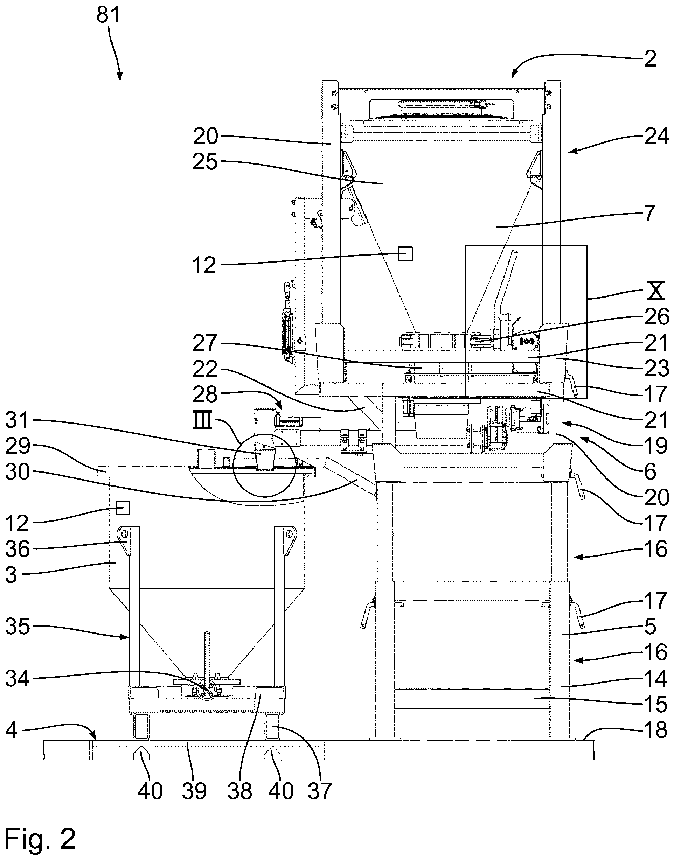

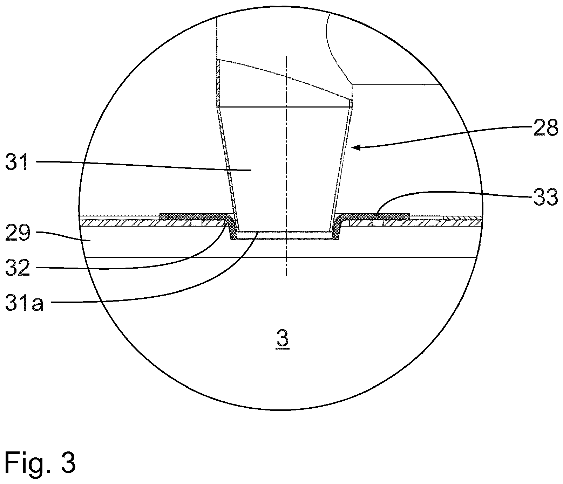

Nachfolgend wird anhand von Fig. 2 und 3 der Aufbau einer Dosierstation 2 und deren Zusammenwirken mit dem Mischbehälter 3 und der Wiegestation 4 näher erläutert.

Das Aufnahmegerüst 5 umfasst mehrere Vertikalstützen 14 und Querstreben 15, die miteinander fest verbunden sind. Gemäß dem gezeigten Ausführungsbeispiel weist das Aufnahmegerüst 5 zwei übereinander gestellte Teilgerüste 16 auf, die mittels eines Verbindungselements 17 miteinander formschlüssig verbunden sind. Das Verbindungselement 17 ist in fluchtende Öffnungen der Teilgerüste 16 gesteckt. Das Aufnahmegerüst 5 kann auch einteilig ausgeführt sein. Das Aufnahmegerüst 5 ist auf dem Boden 18 abgestellt und ermöglicht einen Höhenausgleich zwischen der mobilen Dosiereinheit 6 und dem Mischbehälter 3. Insbesondere ist die Höhe des Aufnahmegerüsts 5 derart festgelegt, dass die Dosiereinheit 6 oberhalb des Mischbehälters 3 angeordnet ist. Insbesondere kann das Aufnahmegerüst 5 höhenverstellbar ausgeführt sein, insbesondere mittels höhenverstellbarer Füße, die an den Vertikalstützen 14 angebracht sind.

Die mobile Dosiereinheit 6 ist auf dem Aufnahmegerüst 5 abgestellt. Dazu weist die mobile Dosiereinheit 6 ein rahmenartiges Gerüst 19 auf. Das Gerüst 19 umfasst Vertikalelemente 20, Horizontalelemente 21 und Diagonalelemente 22, die miteinander fest verbunden sind und das Gerüst 19 bilden. Gemäß dem gezeigten Ausführungsbeispiel weist das Gerüst 19 vier Vertikalelemente 20 auf, die an den Ecken eines Rechtecks angeordnet sind. Die vier Vertikalelemente 20 legen eine Abstellfläche 19a des Gerüsts 19 fest. Mit der Abstellfläche 19a, die parallel zum Boden 18 und insbesondere horizontal orientiert ist, ist das Gerüst 19 auf dem Aufnahmegerüst 5 abgestellt.

Gemäß dem gezeigten Ausführungsbeispiel weist das Gerüst 19 an einer Oberseite angeordnete Horizontalelemente 21 auf. Die Horizontalelemente 21 bilden eine rechteckförmige Aufstellfläche 19b. Die Aufstellfläche 19b ist insbesondere parallel zur Abstellfläche 19a orientiert. Der Vorratsbehälter 7 ist auf der Aufstellfläche 19b des Gerüsts 19 abgestellt. Im Bereich der Aufstellfläche 19b weist das Gerüst 19 in den Eckenbereichen jeweils eine Aufnahmeführung 23 in Form eines Winkelblechs auf, die das Aufsetzen des Vorratsbehälters 7 auf die Aufstellfläche 19b vereinfacht.

Die mobile Dosiereinheit 6, insbesondere das Gerüst 19, ist am Aufnahmegerüst 5 mittels mindestens eines Verbindungselements 17 gehalten und gesichert.

Der Vorratsbehälter 7 ist in einem Behältergerüst 24 aufgenommen. Das Behältergerüst 24 weist vier Vertikalelemente 20 auf, die an den Ecken eines Rechtecks angeordnet sind und mittels Horizontalelementen 21 miteinander verbunden sind. Die Vertikalelemente 20 bilden eine Grundfläche des Behältergerüsts 24, die der Aufstellfläche 19b des Gerüsts 19 der mobilen Dosiereinheit 6 entspricht. Der Vorratsbehälter 7 ist mit dem Behältergerüst 24 zuverlässig und stabil auf der mobilen Dosiereinheit 6 abgestellt. Das Behältergerüst 24 ist mit dem Gerüst 19 mittels mindestens eines Verbindungselements 17 zuverlässig verbunden.

Gemäß dem gezeigten Ausführungsbeispiel ist der Vorratsbehälter 7 als standardisierter IBC ausgeführt. Am unteren Ende des Abgabekonus 25 ist eine Handklappe 26 angeordnet, die ein Öffnen und Schließen der Behälteröffnung ermöglicht.

Die mobile Dosiereinheit 6 weist ein Andockelement 27 auf, das als Andockstutzen ausgeführt ist und zum Andocken des Vorratsbehälters 7 an die mobile Dosiereinheit 6 dient. Mit dem Andockelement 27 verbunden ist ein Dosierelement 28, das gemäß dem gezeigten Ausführungsbeispiel als Dosierschnecke ausgeführt ist. Die Dosierschnecke dient zum dosierten Abgeben, insbesondere Fördern, von Schüttgut aus dem Vorratsbehälter 7 in den Mischbehälter 3.

Um Verunreinigungen der Schüttgutmischung in dem Mischbehälter 3 zu vermeiden, ist der Mischbehälter 3 an der oberen Behälteröffnung mit einem Dosierdeckel 29 abgedeckt. Der Mischbehälter 3 ist direkt unter dem Dosierdeckel 29 platziert. Der Dosierdeckel 29 ist mittels einer Halterung 30 am Aufnahmegerüst 5 gehalten.

Die Dosiereinheit 28 ist derart über dem Dosierdeckel 29 angeordnet, dass ein Austrittsrohr 31 der Dosiereinheit 28 mit einer Abgabeöffnung 31a in eine am Dosierdeckel 29 vorgesehene Eintrittsöffnung 32 hineinragt. Mittels eines ersten elastischen Dichtungsrings 33, der sich an einer Außenseite des Austrittsrohrs 31 und an der Innenseite der Eintrittsöffnung 32 anlegt, ist ein kontaminationsfreier Übergang von dem Dosierelement 28 in den Mischbehälter 3 gewährleistet. Um die Verbindung des Dosierelements 28 mit dem Dosierdeckel 29 zu vereinfachen, ist das Austrittsrohr 31 zumindest abschnittsweise konisch ausgeführt.

Insbesondere bei Anwendungen weniger hohen Qualitätsanforderungen ist es auch denkbar, das Austrittsrohr 31 vertikal beabstandet, also oberhalb, der Eintrittsöffnung 32 am Dosierdeckel 29 anzuordnen und insbesondere auf den elastischen Dichtungsring 33 zu verzichten. Es ist auch denkbar, auf den Dosierdeckel 29 insgesamt zu verzichten.

Alternativ zu dem ersten elastischen Dichtungsring 33 kann zur Verbindung des Austrittsrohrs 31 mit der Eintrittsöffnung 32 des Dosierdeckels 29 ein Verlängerungsrohr mit einer flexiblen Gummimanschette oder ein flexibler Verlängerungsschlauch eingesetzt werden. In diesem Fall ist am Dosierdeckel 29 im Bereich der Eintrittsöffnung 32 ein Eintrittsrohr vorgesehen, mit dem die Gummimanschette mit dem Verlängerungsrohr oder der Verbindungsschlauch verbunden werden kann. Diese Art der flexiblen Verbindung ist insbesondere dann vorteilhaft, wenn durch die Anzahl der benötigten Dosierstationen, insbesondere bei mehr als sechs Dosierstationen 2 oder aufgrund anderer räumlicher Gegebenheiten, ein unmittelbarer freier Zugang zum An- und Abtransport des Mischbehälters 2 nicht gewährleistet wäre. Die flexible Verbindung ermöglicht eine bezüglich ihrer Höhe weiter nach oben versetzte Anordnung der Dosierstationen 2, so dass der An- und Abtransport des Mischbehälters unter den Dosiereinheiten 6 dieser höhenversetzt angeordneten Dosierstationen 2 erfolgen kann. Insbesondere bilden in diesem Fall die Aufnahmegerüste 5 jeweils ein Portal, das mit dem Mischbehälter und/oder einem entsprechenden Transportmittel 9 durchfahren werden kann.

Durch die flexible Verbindung können auch die so angebundenen Dosierstationen 2 horizontal in einer zweiten Reihe hinter Dosierstationen, die unmittelbar benachbart zu dem Mischbehälter 3 angeordnet sind, angeordnet werden.

Der Mischbehälter 3 weist eine Austrittsklappe 34 auf, um das im Mischbehälter vorhandene Mischgut abzugeben. Der Mischbehälter 3 ist von einem Tragegerüst 35 getragen. An dem Tragegerüst 35 sind Hebeösen 36 angeformt, um einen Transport des Mischbehälters 3 mittels eines Schwenkarms und sogenannten Laufkatzen oder mittels eines mobilen Hebekrans zu ermöglichen. An einer Unterseite des Tragegerüsts 35 sind Rollen 37 vorgesehen, um den Mischbehälter beispielsweise manuell von den Dosierstationen 2 zu der Mischeinheit 8 zu rollen. Das Tragegerüst 35 ist mit Transportöffnungen 38 ausgeführt, die in eine Aufnahme von Gabeln eines Transportfahrzeuges, wie beispielsweise eines Flurförderfahrzeuges, ermöglichen.

Der Mischbehälter 3 ist auf der Wiegeeinheit 4 angeordnet. Die Wiegeeinheit 4 ist gemäß dem gezeigten Ausführungsbeispiel im Boden 18 integriert und oberflächenbündig mit diesem ausgeführt. Die Wiegeeinheit 4 kann auch auf dem Boden 18 aufgesetzt angeordnet sein. Die Wiegeeinheit 4 umfasst eine plattenförmige Wiegeplattform 39, auf der der Mischbehälter 3 abgestellt ist. An einer dem Mischbehälter 3 gegenüberliegenden Unterseite ist die Wiegeplattform 39 über mehrere Wiegeelemente 40 abgestützt.

Nachfolgend wird die mobile Dosiereinheit 6 bis 11 näher erläutert.

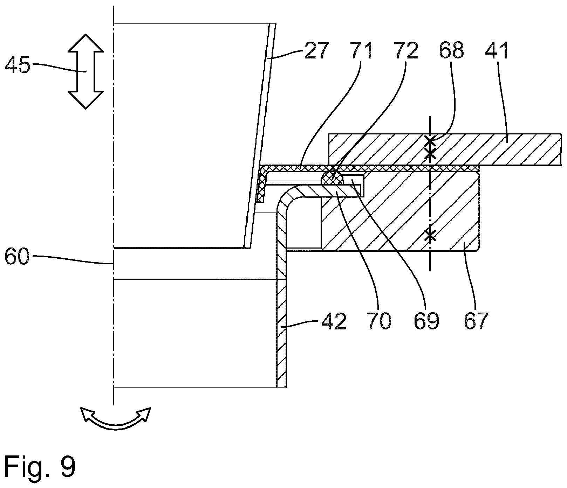

An dem Gerüst 19 ist eine Stützplatte 41 befestigt. Die Stützplatte 41 ist fest mit dem Gerüst 19 verbunden. Die Stützplatte 41 ist oberhalb der Abstellfläche 19a und unterhalb der Aufstellfläche 19b angeordnet. Insbesondere ist die Stützplatte 41 parallel zu der Abstellfläche 19a und zu der Aufstellfläche 19b orientiert und zwischen der Abstellfläche 19a und der Aufstellfläche 19b angeordnet. An einer Unterseite der Stützplatte 41 ist das Dosierelement 28 mit einem Eintrittsstutzen 42 befestigt. Diese Verbindung wird anhand der Fig. 9 noch erläutert.

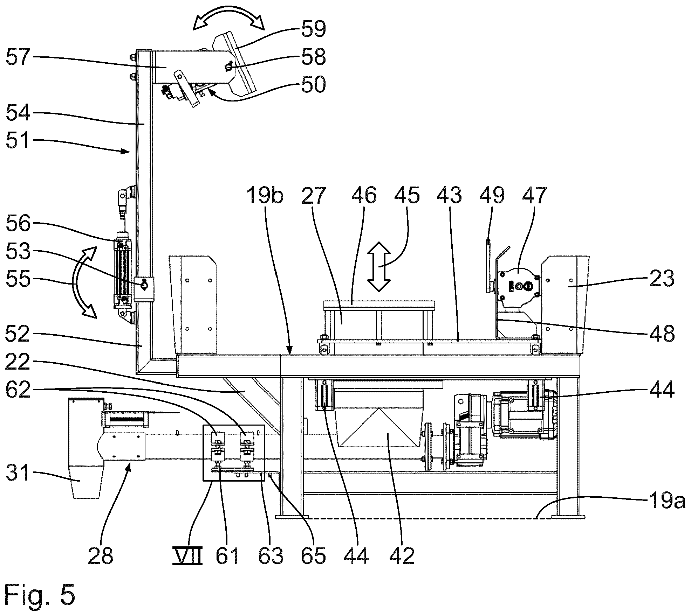

Oberhalb und vertikal beanstandet zu der Stützplatte 41 ist eine Andockplatte 43 angeordnet. Die Andockplatte 43 ist an der Stützplatte 41 über mehrere, gemäß dem gezeigten Ausführungsbeispiel vier, Verstellelemente 44 höhenverstellbar angeordnet. Die Höhenverstellbarkeit ist in Fig. 5 durch den Doppelpfeil 45 symbolisiert. Die Verstellelemente 44 sind als Andockzylinder ausgeführt.

An der Andockplatte 43 ist das Andockelement 27 in Form des Andockstutzens befestigt. An der ringförmigen Oberseite des Andockstutzens 27 ist eine elastische Dichtungsauflage 46 angeordnet, die eine Dicke von mindestens 2 mm, insbesondere mindestens 5 mm und insbesondere mindestens 10 mm aufweist. Die Dichtungsauflage 46 ermöglicht eine sichere und dichte Verbindung zwischen dem Austritt des Vorratsbehälters 7 und dem Andockstutzen 27. Verunreinigungen während des Mischprozesses und/oder Fehlaustritt von Schüttgut ins Freie sind verhindert.

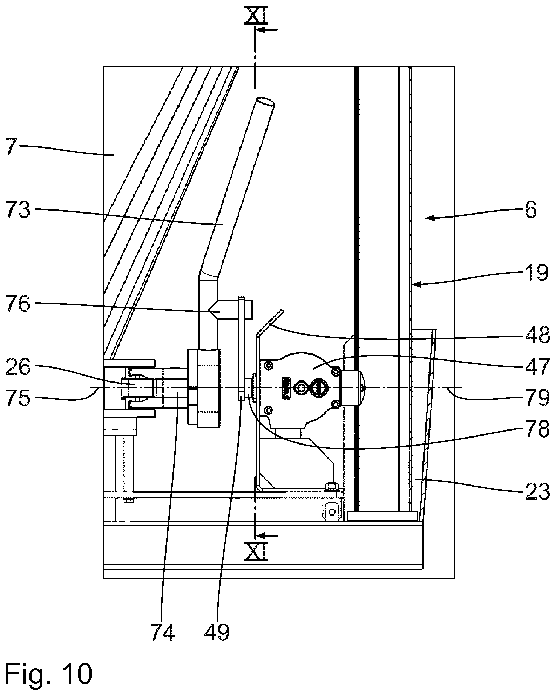

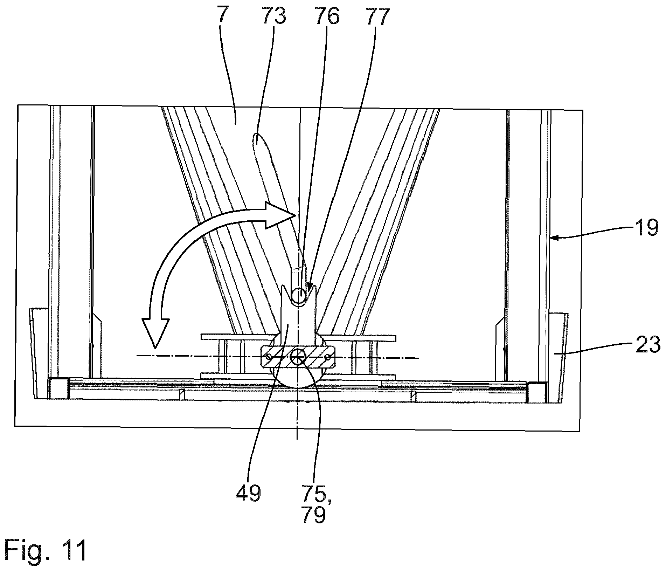

An der Andockplatte 43 ist ein externer Klappenantrieb 47 angeordnet, der mittels eines Halteprofils 48 an der Andockplatte 43 befestigt ist. Drehfest bezüglich der Antriebsachse des Klappenantriebs 47 ist ein Mitnehmer 49 mit dem Klappenantrieb 47 verbunden. Der Klappenantrieb 47 ermöglicht über den Mitnehmer 49 eine angetriebene, insbesondere gesteuerte, Betätigung der Handklappe 26 am Vorratsbehälter 7. Die Funktion des Klappenantriebs 47 und das Zusammenwirken mit der Handklappe 26 werden anhand der Fig. 10 und 11 noch erläutert.

Gemäß dem gezeigten Ausführungsbeispiel ist an dem Gerüst 19 eine Austragshilfe 50 in Form eines Klopfers angeordnet. Die Art der verwendeten Austragshilfe 50 kann entsprechend den Eigenschaften der verwendeten Schüttgutkomponente gewählt werden. Die Austragshilfe ist mittels eines flexiblen Haltemechanismus 51 am Gerüst 19 befestigt. Der Haltemechanismus 51 ist lösbar mit dem Gerüst 19 verbindbar, insbesondere anschraubbar. Der Haltemechanismus 51 umfasst einen anschraubbaren oder andockbaren Haltewinkel 52, der an das Gerüst 19 angeschraubt oder angedockt ist. An dem Haltewinkel 52 ist um eine Schwenkachse 53 ein Stützarm 54 schwenkbar angelenkt. Die Schwenkachse 53 wird durch einen Schwenkbolzen realisiert, der in fluchtenden Öffnungen des Haltewinkels 52 und des Stützarms 54 geführt ist. Um eine durch den Doppelpfeil 55 symbolisierte Schwenkbewegung durchzuführen, sind der Haltewinkel 52 und der Stützarm 54 mittels eines Linear-Verstellelements 56 in Form eines Verstellzylinders miteinander verbunden. Eine Linearverstellung des Linear-Verstellelements 56 bewirkt eine Schwenkbewegung des Stützarms 54 gegenüber dem Haltewinkel 52. An dem Stützarm 54 ist eine klammerartige Aufnahme 57 befestigt. Die Austragshilfe 50 ist in der Aufnahme 57 um eine zweite Schwenkachse 58 schwenkbar angeordnet. Gemäß dem gezeigten Ausführungsbeispiel weist die Austragshilfe 50 eine bewegbare Anlegeplatte 59 auf. Mit der bewegbaren Anlegeplatte 59 kann die Austragshilfe 50 flächig an die Außenwand des Vorratsbehälters 7, die konisch und/oder zylindrisch ausgeführt sein kann, angelegt werden.

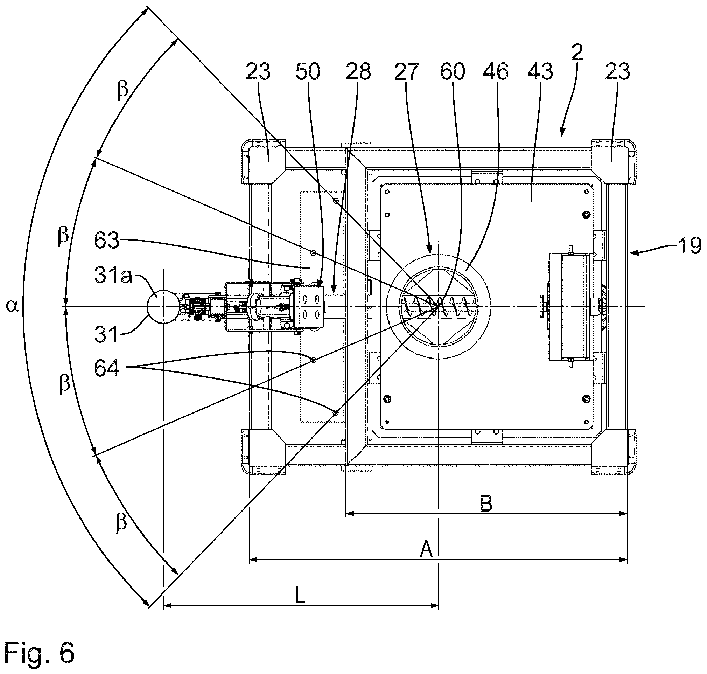

Das Dosierelement 28 ist an dem Gerüst 19 um eine Dosierelement-Schwenkachse 60 schwenkbar am Gerüst 19 angelenkt. Das Dosierelement 28 ist in einer Ebene, die parallel zur Abstellfläche 19a orientiert ist, schwenkbar, wie dies insbesondere in Fig. 6 dargestellt ist. Die Dosierelement-Schwenkachse 60 ist insbesondere konzentrisch zu dem Andockelement 27 orientiert.

An dem Dosierelement 28 ist eine Gleitplatte 61 befestigt. Die Gleitplatte 61 ist insbesondere aus einem Grundmaterial wie Aluminium, Bronze oder Edelstahl hergestellt. Zur Verbesserung der Gleiteigenschaften kann die Gleitplatte 61 mit einem gleitfähigen Material wie beispielsweise PTFE oder POM versehen oder daraus hergestellt sein. Die Gleitplatte 61 ist an dem Dosierelement 28 mittels zweier Rohrschellen 62 als Befestigungselementen lösbar befestigt. Die Gleitplatte 61 ist parallel zur Abstellfläche 19a orientiert.

Die Gleitplatte 61 liegt flächig an einer Verschiebeplatte 63 auf. Die Verschiebeplatte 63 ist parallel zur Abstellfläche 19a orientiert. Die Gleitplatte 61 und die Verschiebeplatte 63 sind parallel zueinander orientiert. Die Gleitplatte 61 und die Verschiebeplatte 63 sind insbesondere horizontal orientiert.

An einer der Gleitplatte 61 abgewandten Unterseite sind an der Verschiebeplatte 63 in Durchgangsöffnungen 64 federgelagerte Fixierelemente 65 in Form von Fixierstiften angeordnet.

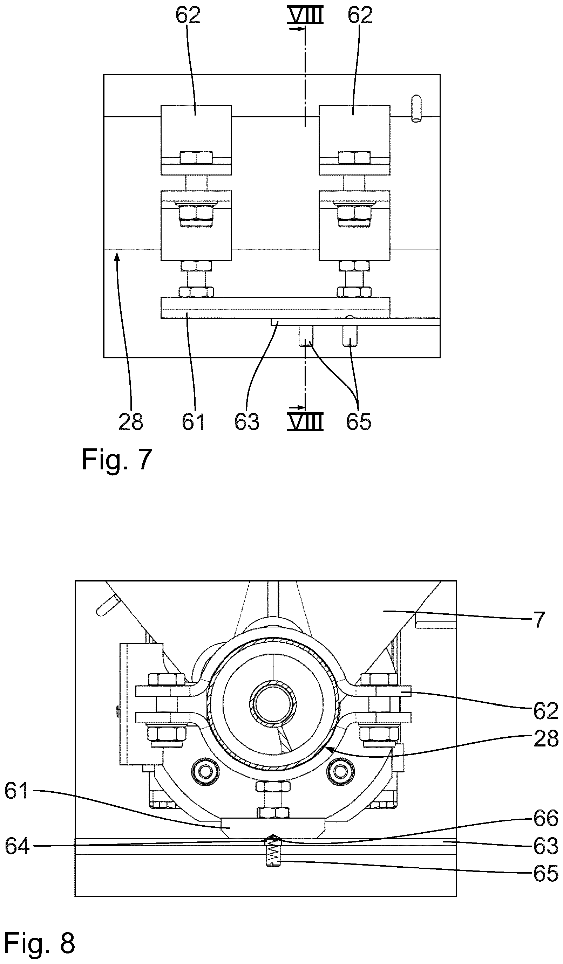

An einer der Verschiebeplatte 63 zugewandten Unterseite weist die Gleitplatte 61 eine Fixierelement-Ausnehmung 66 auf. Wenn die Gleitplatte 61 mit der Fixierelement-Ausnehmung 66 fluchtend zu dem Fixierelement 65 angeordnet ist, wie dies in Fig. 8 gezeigt ist, wird das federgelagerte Fixierelement 65 vertikal nach oben in die Fixierelement-Ausnehmung 66 gedrückt. In dieser Anordnung ist das Dosierelement 28 in einer Dosierelement-Schwenkposition fixiert am Gerüst 19 und insbesondere an der Verschiebeplatte 63 angeordnet. Ein unbeabsichtigtes Verschwenken des Dosierelements 28 ist dadurch verhindert.

Die Fixierelement-Ausnehmung 66 ist insbesondere als Nut in der Gleitplatte 61 ausgeführt. Die Nut ist insbesondere dachförmig ausgeführt. Die Nutform kann auch kreisbogenförmig, vieleckförmig, rechteckig oder als halbes Sechseck ausgeführt sein.

Gemäß dem gezeigten Ausführungsbeispiel sind an der Verschiebeplatte 63 fünf Durchgangsöffnungen 64 mit darin angeordneten Fixierelementen 65 vorgesehen. Gemäß dem gezeigten Ausführungsbeispiel weist die mobile Dosiereinheit 6 fünf definierte Dosierelement-Schwenkpositionen auf. Durch die Anordnung der Durchgangsöffnungen 64 mit den Fixierelementen 65 an der Verschiebeplatte 63 können bestimmte Dosierelement-Schwenkpositionen vorgegeben werden. Vorteilhaft ist es, wenn der maximale Verstellwinkel α 180°, insbesondere mindestens 140° und insbesondere mindestens 90° beträgt. Die Anzahl der Durchgangsöffnungen 64 mit den Fixierelementen 65 beträgt vorteilhafterweise zwischen 1 und 10, insbesondere zwischen 2 und 8 und insbesondere zwischen 3 und 5. Ein Abstands-Verstellwinkel β zwischen zwei benachbarten Fixierelementen 65 ist insbesondere kleiner als 90°, insbesondere kleiner als 45° und insbesondere kleiner als 30°.

Zusätzlich oder alternativ kann das Dosierelement 28 in verschiedenen Längen ausgeführt sein. Dadurch kann der Abstand L von der Mitte der Abgabeöffnung 31a des Austrittsrohrs 31 des Dosierelements 28 zu der Mitte des Eintrittsstutzens 42 in das Dosierelement 28 verändert werden. Insbesondere beträgt der Abstand L das 0,6-fache bis 4-fache einer Seitenlänge A des Vorratsbehälters 7, insbesondere einer Seitenlänge A des Behältergerüsts 24. Insbesondere gilt: 0,7 · A ≤ L ≤ 2,0 · A, insbesondere 0,75 · A ≤ L ≤ 1,5 · A.

Wesentlich ist, dass der Abstand L mehr als das 0,5-fache einer Seitenlänge B des Gerüsts 19 beträgt. Dadurch ist gewährleistet, dass das Austrittsrohr 31 mit der Abgabeöffnung 31a außerhalb einer senkrechten Projektion, also einer vertikalen Projektion des Gerüsts 19 angeordnet ist. Die vertikale Projektion des Gerüsts 19 entspricht der Abstellfläche 19a. Insbesondere gilt: L ≥ 0, 7 · B, insbesondere L ≥ 0,9 · B und insbesondere L ≥ 1,2 · B.

Zusätzlich oder alternativ ist es denkbar, eine Schwenkbarkeit des Dosierelements 28 in einer vertikalen Ebene einzurichten, die insbesondere senkrecht zur Abstellfläche 19a orientiert ist und insbesondere die Dosierelement-Schwenkachse 60 beinhaltet. Insbesondere ist eine vertikale Schwenk barkeit des Dosierelements 28 mit einem Vertikal-Schwenkwinkel in Bezug auf die Horizontalachse von +/- 60°, insbesondere von +/- 45° und insbesondere von +/- 30° vorteilhaft.

Fig. 9 zeigt eine vergrößerte Schnittansicht des höhenverstellbaren Andockelements 27 mit dem Eintrittsstutzen 42 des Dosierelements 28. An der Stützplatte 41, die ortsfest mit dem Gerüst 19 verbunden ist, ist ein Eintrittsflansch 67 befestigt, insbesondere mittels rein schematisch dargestellter Befestigungsschrauben 68 angeschraubt. Der Eintrittsflansch 67 weist eine obere, der Stützplatte 41 zugewandte Ring-Aussparung 69 auf. In der Ring-Aussparung 69 ist der Eintrittsstutzen 42 mit einem radial vorstehenden Bund 70, der gemäß dem gezeigten Ausführungsbeispiel als Umbördelung ausgeführt ist, entlang der Dosierelement-Schwenkachse 60 axial gehalten. Der Eintrittsstutzen 42 ist zwischen der Stützplatte 41 und dem Eintrittsflansch 67 um die Dosierelement-Schwenkachse 60 geklemmt, aber drehbar angeordnet.

Zwischen der Stützplatte 41 und dem Eintrittsflansch 67 ist ein zweiter elastischer Dichtungsring 71 angeordnet. Die Form des zweiten elastischen Dichtungsrings 71 ermöglicht es, dass sich dieser an den Konus des Andockelements 27 abdichtend anlegt, so dass ein kontaminationsfreier Übergang von dem Andockelement 27 in das Dosierelement 28 gewährleistet ist. Das Dosierelement 28 ist an einer Unterseite des Eintrittsstutzens 42 angeordnet und fest mit dem Eintrittsstutzen 42 verbunden. Der Eintrittsstutzen 42 stützt das Dosierelement 28 ab.

Der Bund 70 des Eintrittsstutzens 42 ist mittels einer Ringdichtung 72 an dem zweiten elastischen Dichtungsring 71 abgedichtet. Mittels des zweiten elastischen Dichtungsrings 71 und der Ringdichtung 72 ist der Eintrittsstutzen 42 mit dem Bund 70 derart in der Ring-Aussparung 69 axial geklemmt, dass eine manuelle Drehbarkeit des Eintrittsstutzens 42 und damit des Dosierelements 28 um die Dosierelement-Schwenkachse 60 möglich ist.

Fig. 10 und 11 zeigen eine Verbindung des Vorratsbehälters 7 mit der daran angeordneten Handklappe 26 am Gerüst 19 der Dosiereinheit 6. Zur Betätigung der am Vorratsbehälter 7 angeordneten Handklappe 26 ist ein Handverstellhebel 73 vorgesehen, der eine Drehung einer Handklappenwelle 74 um deren Handklappenachse 75 ermöglicht. An dem Handklappenhebel 73 ist ein Mitnehmerzapfen 76 angeordnet, der sich insbesondere parallel zur Handklappenachse 75 erstreckt. Wenn der Vorratsbehälter 7, wie in Fig. 2 und 10 dargestellt, auf der mobilen Dosiereinheit 6 abgestellt ist, liegt der Mitnehmerzapfen 76 in einer korrespondierenden Vertiefung 77 des Mitnehmers 49. Der Mitnehmer 49 ist als Exzenterhebel drehfest mit der Klappenantriebswelle 78 verbunden. Die Klappenantriebswelle 78 ist um die Klappenantriebsachse 79 drehbar antreibbar. Die Klappenantriebsachse 79 und die Handklappenachse 75 sind parallel zueinander orientiert. Gemäß dem gezeigten Ausführungsbeispiel sind die Handklappenachse 75 und die Klappenantriebsachse 79 fluchtend also koaxial zueinander orientiert. Die Handklappenachse 75 und die Klappenantriebsachse 79 können mit einem senkrechten Abstand zueinander angeordnet sein, wobei dieser Abstand insbesondere kleiner ist als 50 mm, insbesondere kleiner als 25 mm und insbesondere kleiner als 10 mm.

Nachfolgend wird anhand der Fig. 1 bis 11 ein Verfahren zum Dosieren und/oder Mischen von Schüttgut näher erläutert.

Ausgehend von einer herzustellenden Rezeptur, die beispielsweise vier verschiedene Rezepturbestandteile, also vier verschiedene Schüttgüter umfasst, wird die Anlage zum Dosieren und Mischen der Rezepturbestandteile modular und baukastenförmig aufgebaut. Mittels eines oder mehrerer Transportmittel 9 werden zwei Aufnahmegerüste 5 jeweils seitlich neben der Wiegeeinheit 4 angeordnet. Auf die Aufnahmegerüste 5 werden jeweils zwei mobile Dosiereinheiten 6 abgestellt. Dazu kann das Transportmittel 9 Dosiereinheiten 6 aus dem Teilelager 10 entnehmen und auf das Aufnahmegerüst 5 gestapelt aufsetzen.

Auf der Wiegeeinheit 4 wird ein Mischbehälter 3 positioniert und mit dem Dosierdeckel 29 verschlossen. Anschließend werden die Dosierelemente 28 in die jeweils erforderliche Dosierelement-Schwenkposition verschwenkt und mittels der Fixierelemente 65 fixiert. Die Dosierelemente 28 werden mit dem Austrittsrohr 31 an dem Dosierdeckel 29, wie in Fig. 3 dargestellt, angeordnet.

Die Vorratsbehälter 7 werden jeweils mit dem Behältergerüst 24 auf die Aufstellfläche 19b des Gerüsts 19 der mobilen Dosiereinheit 6 abgestellt. Zum Andocken des Andockelements 27 der mobilen Dosiereinheit 6 an dem Vorratsbehälter 7 wird die Andockplatte vertikal nach oben verlagert, so dass Andockelement 27 sich in einer abgedichteten Position, wie in Fig. 9 dargestellt, befindet. Die Befüllung der Vorratsbehälter 7 mit dem Schüttgut erfolgt insbesondere in einem vorgelagerten Prozessschritt. Insbesondere werden die befüllten Vorratsbehälter 7 in dem Lagergestell 10 abgestellt, um zur weiteren Verwendung schnell und flexibel verfügbar zu sein. Sofern die Vorratsbehälter 7 noch nicht befüllt sind, ist eine Befüllung der Vorratsbehälter 7 mit dem jeweiligen Rezepturbestandteil möglich. Die Vorratsbehälter 7 können aus Säcken, Bigbags, aus Fässern und/oder mittels einer pneumatischen Förderung befüllt werden.

Durch das Aufsetzen des Vorratsbehälters 7 auf die mobile Dosiereinheit 6 kommt der Handklappenhebel 73, insbesondere der Mitnehmerzapfen 76, mit dem Mitnehmer 49 der mobilen Dosiereinheit 6 in Eingriff.

Die Anlage 1 ermöglicht eine vollautomatisierte, exakte und prozesssichere Dosierung und Mischung von Rezepturen. Insbesondere ist eine automatisierte Rezepturzusammenstellung möglich. Eine konstante und wiederholgenaue Qualität bei der Herstellung einer Rezeptur ist gewährleistet. Insbesondere kann jede hergestellte Charge eindeutig und unmittelbar zurückverfolgt werden. Die erfindungsgemäße Anlage ermöglicht eine lückenlose Dokumentation. Aufgrund des modularen, baukastenartigen Aufbaus der Anlage ergeben sich kurze Reinigungszeiten und eine kontaminationsfreie Produktion. Insbesondere ist die modular aufgebaute Anlage an verschiedene Rezepturanforderungen und räumliche Gegebenheiten anpassbar und/oder erweiterbar.

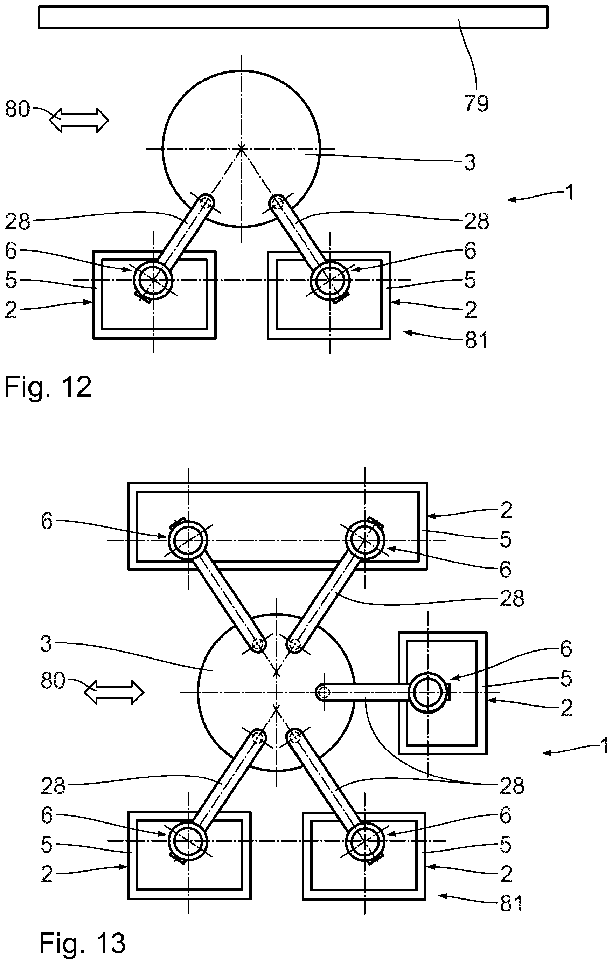

Die in Fig. 12 bis 14 gezeigten Anlagenausschnitte zeigen jeweils ein Dosier- und Verwiegesystem 81 mit einem Mischbehälter 3.

Fig. 12 zeigt in einer schematischen Draufsicht eine Anlage 1 mit zwei Dosierstationen 2, die jeweils über das Dosierelement 28 mit dem Mischbehälter 3 verbunden sind. Aufgrund eines räumlichen Hindernisses 79, insbesondere einer Wand, sind die Dosierstationen 2 an einer dem Hindernis 79 gegenüberliegenden Seite des Mischbehälters 3 angeordnet. Zwischen der Wand 79 und der Dosierstationen 2 verbleibt eine Transportgasse 80, entlang der der An- und Abtransport von Mischbehältern 3 erfolgen kann.

In Fig. 13 ist eine ähnliche Anlage 1 dargestellt mit fünf Dosiereinheiten 6. Die Dosiereinheiten 6 sind U-förmig um den Mischbehälter 3 herum angeordnet. An der Öffnung des U mündet die Transportgasse 80. Wie in Fig. 13 gezeigt, kann das oben dargestellte Aufnahmegerüst 5 zur Aufnahme von zwei Dosiereinheiten 6 ausgeführt sein.

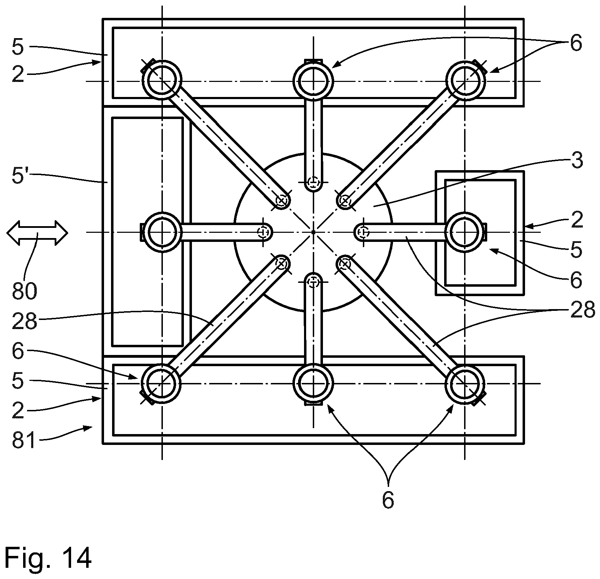

Bei der Anlage 1 gemäß Fig. 14 sind acht Dosiereinheiten 6 vorgesehen, die rechteckförmig um den Mischbehälter 3 angeordnet sind. Das in Fig. 14 links dargestellte Aufnahmegerüst 5' ist vertikal erhöht ausgeführt. Die lichte Höhe des Aufnahmegerüsts 5' ist insbesondere derart groß, dass das Transportmittel 9 mit einem Mischbehälter 3 entlang der Transportgasse 80 ungehindert durchfahren kann.

Grundsätzlich sind verschiedene, insbesondere beliebige Anordnungen der Dosiereinheiten 6 bezüglich des Mischbehälters 3 möglich. Die Dosiereinheiten 6 können L-förmig oder eckig um den Mischbehälter 3 herum angeordnet sein. Sollte eine Rezeptur mehr Schüttgutkomponenten erfordern, als Dosiereinheiten 6 an dem Mischbehälter 3 angeordnet werden können, kann der Dosierprozess auf zwei Dosier- und Verwiegesysteme 81 aufgeteilt werden.

Für die Herstellung einer aufwändigen Rezeptur können also mehrere Dosier- und Verwiegesysteme 81 mit jeweils einem Mischbehälter 3 verwendet werden, wobei nach der Dosierung der Teilmischungen in den jeweiligen Mischbehältern 3 eine Gesamtmischung durch Zusammenführen der Mischgüter aus den Mischbehältern erfolgt. Dies betrifft einen Parallelbetrieb mehrerer Dosier- und Verwiegesysteme.

Es ist auch denkbar, mehrere Dosier- und Verwiegesysteme in Reihe, also sequenziell mit nur einem Mischbehälter, zu betreiben. Beispielsweise kann an dem ersten Dosier- und Verwiegesystem 81 ein Dosieren der ersten Rezepturbestandteile erfolgen. Der teilweise befüllte Mischbehälter 3 wird zu dem zweiten Dosier- und Verwiegesystem 81 transportiert. Dort werden die restlichen Rezepturbestandteile dosiert. Für diesen Transport sind die Rollen 37 am Mischbehälter 3 vorteilhaft, die insbesondere auf einer nicht dargestellten Rollenbahn abrollen können.

Die Aufnahmegerüste 5 können so ausgebildet sein, dass ein oder mehrere Dosiereinheiten 6 nebeneinander auf dem Aufnahmegerüst 5 angeordnet sind. Es ist auch denkbar, dass für jede Dosiereinheit 6 ein separates Aufnahmegerüst 5 vorhanden ist. In einer Anlage 1 können verschiedene Aufnahmegerüste miteinander kombiniert werden.

## Patentansprüche

1. Anlage zum Dosieren und/oder Mischen von Schüttgut umfassend
a. mindestens eine Dosierstation (2) mit einer mobilen Dosiereinheit (6) und mit einem Vorratsbehälter (7),
b. einen mobilen Mischbehälter (3),
c. eine Wiegeeinheit (4) für den Mischbehälter (3),
wobei die mobile Dosiereinheit (6) umfasst
d. ein Andockelement (27) zum Andocken des Vorratsbehälters (7) an die mobile Dosiereinheit (6),
e. ein mit dem Andockelement (27) verbundenes Dosierelement (28) zum dosierten Abgeben von Schüttgut in den Mischbehälter (3),
**dadurch gekennzeichnet, dass**
- die Anlage (1) mehrere Dosierstationen (2) aufweist, die einem Mischbehälter (3) zugeordnet sind,
- die mobile Dosiereinheit (6) ein Gerüst (19) mit einer Abstellfläche (19a) zum Abstellen der Dosiereinheit (6) und mit einer Aufstellfläche (19b) umfasst,
- der Vorratsbehälter (7) auf der Aufstellfläche (19b) der mobilen Dosiereinheit (6) abgestellt ist,
- der Vorratsbehälter (7) ein rahmenartiges Grundgerüst (24) aufweist, mit dem der Vorratsbehälter (7) auf der Aufstellfläche (19b) des Gerüsts (19) der mobilen Dosiereinheit (6) zuverlässig anordenbar ist,
- das Andockelement (27) am Gerüst (19) angebracht ist.

2. Anlage gemäß Anspruch 1, **gekennzeichnet durch** mindestens ein Verbindungselement (17) zum lösbaren modularen Verbinden des Gerüsts (19) an der Abstellfläche (19a) und/oder Aufstellfläche (19b) mit einer weiteren Einheit (5, 7) der Anlage (1).

3. Anlage gemäß einem der vorstehenden Ansprüche, **dadurch gekennzeichnet, dass** das Andockelement (27) an einer am Gerüst (19), insbesondere an einer Stützplatte (41), verlagerbar angeordneten Andockplatte (43) gehalten ist.

4. Anlage gemäß Anspruch 3, **dadurch gekennzeichnet, dass** die Andockplatte (43) an dem Gerüst (19), insbesondere der Stützplatte (41), mit mindestens einem Verstellelement (44) höhenverstellbar angeordnet ist.

5. Anlage gemäß einem der vorstehenden Ansprüche, **dadurch gekennzeichnet, dass** das Dosierelement (28) in einer zur Abstellfläche (19a) parallel orientierten Ebene schwenkbar angeordnet und/oder mit verschiedenen Längen verfügbar angeordnet ist.

6. Anlage gemäß Anspruch 5, **gekennzeichnet durch mindestens** ein am Gerüst (19), insbesondere an einer Verschiebeplatte (63), angeordnetes Fixierelement (65) zum fixierten Anordnen des Dosierelements (28) in einer Dosierelement-Schwenkposition.

7. Anlage gemäß Anspruch 6, **gekennzeichnet durch mindestens** eine am Dosierelement (28), insbesondere an einer Gleitplatte (61), angeordnete Fixierelement-Ausnehmung (66) zum Zusammenwirken mit dem Fixierelement (65).

8. Anlage gemäß einem der vorstehenden Ansprüche, **gekennzeichnet durch** einen am Gerüst (19) angeordneten Klappenantrieb (47) mit einem Mitnehmer (49) zum Koppeln an eine Klappe (26) des Vorratsbehälters (7).

9. Anlage gemäß einem der vorstehenden Ansprüche, **gekennzeichnet durch** eine am Gerüst (19) veränderlich anordenbare Austragshilfe (50).

10. Anlage gemäß einem der vorstehenden Ansprüche, **gekennzeichnet durch** eine zentrale Steuerungseinheit (11), die insbesondere mit der Wiegeeinheit (4), dem Vorratsbehälter (7) und/oder der mobilen Dosiereinheit (6) in Signalverbindung steht.

11. Anlage gemäß einem der vorstehenden Ansprüche, **gekennzeichnet durch** ein Transportmittel (9) zum Transport, insbesondere des Mischbehälters (3), der mobilen Dosiereinheit (6) und/oder des mindestens einen Vorratsbehälters (7).

12. Anlage gemäß einem der vorstehenden Ansprüche, **gekennzeichnet durch** eine den Mischbehälter (3) aufnehmende Mischeinheit (8) zum Mischen des im Mischbehälter (3) dosierten Mischguts.

13. Anlage gemäß einem der vorstehenden Ansprüche, **gekennzeichnet durch** einen Lagerbereich, der insbesondere ein Lagergestell (10) aufweist, zum Lagern von Moduleinheiten, insbesondere Vorratsbehältern (7), Mischbehältern (3) und/oder Dosiereinheiten (6), die für eine aktuelle Anlagenkonfiguration nicht erforderlich sind.

## Claims

1. Facility for dosing and/or mixing bulk material comprising
a. at least one dosing station (2) with a mobile dosing unit (6) and with a storage container (7),
b. a mobile mixing container (3),
c. a weighing unit (4) for the mixing container (3),
wherein the mobile dosing unit (6) comprises
d. a docking element (27) for docking the storage container (7) to the mobile dosing unit (6),
e. a dosing element (28) connected to the docking element (27) for dosed discharge of bulk material into the mixing container (3),
**characterized in that**
- the facility (1) has a plurality of dosing stations (2) which are assigned to a mixing container (3),
- the mobile dosing unit (6) comprises a framework (19) with a support surface (19a) for placing the dosing unit (6) and with an installation surface (19b),
- the storage container (7) is placed on the installation surface (19b) of the mobile dosing unit (6),
- the storage container (7) has a frame-like base framework (24) with which the storage container (7) can be reliably arranged on the installation surface (19b) of the framework (19) of the mobile dosing unit (6),
- the docking element (27) is attached to the framework (19).

2. Facility according to claim 1, **characterized by** at least one connection element (17) for the detachable modular connection of the framework (19) to the support surface (19a) and/or installation surface (19b) to a further unit (5, 7) of the facility (1).

3. Facility according to any one of the preceding claims, **characterized in that** the docking element (27) is held on a docking plate (43) arranged displaceably on the framework (19), in particular on a supporting plate (41).

4. Facility according to claim 3, **characterized in that** the docking plate (43) is arranged on the framework (19), in particular the supporting plate (41), so as to be adjustable in height by means of at least one adjustment element (44).

5. Facility according to any one of the preceding claims, **characterized in that** the dosing element (28) is arranged pivotably in a plane oriented parallel to the support surface (19a) and/or is arranged with different lengths available.

6. Facility according to claim 5, **characterized by** at least one fixing element (65) arranged on the framework (19), in particular on a displacement plate (63), for the fixed arrangement of the dosing element (28) in a dosing element swivel position.

7. Facility according to claim 6, **characterized by** at least one fixing element recess (66) arranged on the dosing element (28), in particular on a sliding plate (61), for cooperation with the fixing element (65).

8. Facility according to any one of the preceding claims, **characterized by** a flap drive (47) arranged at the framework (19) with a catch (49) for coupling to a flap (26) of the storage container (7).

9. Facility according to any one of the preceding claims, **characterized by** a discharge aid (50) which can be variably arranged at the frame (19).

10. Facility according to any one of the preceding claims, **characterized by** a central control unit (11) which has a signal connection in particular with the weighing unit (4), the storage container (7) and/or the mobile dosing unit (6).

11. Facility according to any one of the preceding claims, **characterized by** a transport means (9) for transporting, in particular, the mixing container (3), the mobile dosing unit (6) and/or the at least one storage container (7).

12. Facility according to any one of the preceding claims, **characterized by** a mixing unit (8) accommodating the mixing container (3) for mixing the mixture dosed in the mixing container (3).

13. Facility according to any one of the preceding claims, **characterized by** a storage area, which in particular has a storage rack (10), for storing modular units, in particular storage containers (7), mixing containers (3) and/or dosing units (6), which are not required for a current facility configuration.

## Revendications

1. Système de dosage et/ou de mélange d'une matière en vrac comprenant
a. au moins une station de dosage (2) avec une unité de dosage mobile (6) et avec un réservoir (7),
b. un récipient de mélange mobile (3),
c. une unité de pesage (4) pour le récipient de mélange (3),
l'unité de dosage mobile (6) comprenant
d. un élément d'amarrage (27) pour amarrer le réservoir (7) à l'unité de dosage mobile (6),
e. un élément de dosage (28) relié à l'élément d'amarrage (27) pour délivrer de manière dosée de la matière en vrac dans le récipient de mélange (3),
**caractérisé en ce que**
- le système (1) présente plusieurs stations de dosage (2) qui sont associées à un récipient de mélange (3),
- l'unité de dosage mobile (6) comprend une structure (19) avec une surface de pose (19a) pour poser l'unité de dosage (6) et avec une surface d'installation (19b),
- le réservoir (7) est déposé sur la surface de pose (19b) de l'unité de dosage mobile (6),
- le réservoir (7) présente une structure de base (24) en forme de cadre, avec laquelle le réservoir (7) peut être disposé de manière fiable sur la surface de pose (19b) de la structure (19) de l'unité de dosage mobile (6),
- l'élément d'amarrage (27) est fixé à la structure (19).

2. Système selon la revendication 1, **caractérisé par** au moins un élément de liaison (17) pour relier de manière amovible et modulaire la structure (19) sur la surface de pose (19a) et/ou la surface d'installation (19b) à une autre unité (5, 7) du système (1).

3. Système selon l'une quelconque des revendications précédentes, **caractérisé en ce que** l'élément d'amarrage (27) est maintenu sur une plaque d'amarrage (43) disposée de manière déplaçable sur la structure (19), en particulier sur une plaque de support (41).

4. Système selon la revendication 3, **caractérisé en ce que** la plaque d'amarrage (43) est disposée de manière réglable en hauteur sur la structure (19), en particulier sur la plaque de support (41), avec au moins un élément de réglage (44).

5. Système selon l'une quelconque des revendications précédentes, **caractérisé en ce que** l'élément de dosage (28) est disposé de manière à pouvoir pivoter dans un plan orienté parallèlement à la surface de pose (19a) et/ou est disposé de manière à être disponible avec différentes longueurs.

6. Système selon la revendication 5, **caractérisé par** au moins un élément de fixation (65) disposé sur la structure (19), en particulier sur une plaque de déplacement (63), pour disposer de manière fixe l'élément de dosage (28) dans une position de pivotement de l'élément de dosage.

7. Système selon la revendication 6, **caractérisé par** au moins un évidement d'élément de fixation (66) disposé sur l'élément de dosage (28), en particulier sur une plaque de glissement (61), pour coopérer avec l'élément de fixation (65).

8. Système selon l'une quelconque des revendications précédentes, **caractérisé par** un entraînement de clapet (47) disposé sur la structure (19) et comportant un entraîneur (49) destiné à être couplé à un clapet (26) du réservoir (7).

9. Système selon l'une quelconque des revendications précédentes, **caractérisé par** une aide à la distribution (50) pouvant être disposée de manière variable sur la structure (19).

10. Système selon l'une quelconque des revendications précédentes, **caractérisé par** une unité de commande centrale (11), qui est en particulier en liaison de signalisation avec l'unité de pesage (4), le réservoir (7) et/ou l'unité de dosage mobile (6).

11. Système selon l'une quelconque des revendications précédentes, **caractérisé par** un moyen de transport (9) pour le transport, en particulier du récipient de mélange (3), de l'unité de dosage mobile (6) et/ou du l'au moins un réservoir (7).

12. Système selon l'une quelconque des revendications précédentes, **caractérisé par** une unité de mélange (8) recevant le récipient de mélange (3) pour mélanger la matière mélangée dosée dans le récipient de mélange (3).

13. Système selon l'une quelconque des revendications précédentes, **caractérisé par** une zone de stockage, qui comprend en particulier un bâti de stockage (10), pour le stockage d'unités modulaires, en particulier de réservoirs (7), de récipients de mélange (3) et/ou d'unités de dosage (6), qui ne sont pas nécessaires pour une configuration actuelle du système.
